# EUROPÄISCHE PATENTSCHRIFT

(11) **EP 2 766 170 B1**
(45) Veröffentlichungstag und Bekanntmachung des Hinweises auf die Patenterteilung: **26.08.2015**
(21) Anmeldenummer: 12772271.8
(22) Anmeldetag: 01.10.2012
(51) Int. Cl.: B29C 37/00, B29C 45/16

(54) **VERFAHREN ZUM BESCHICHTEN EINES FORMTEILS**
METHOD FOR COATING A MOLDED PART
PROCÉDÉ DE REVÊTEMENT D'UNE PIÈCE MOULÉE

(30) Priorität: 11.10.2011 DE 102011115591
(43) Veröffentlichungstag der Anmeldung: 20.08.2014
(73) Patentinhaber: KraussMaffei Technologies GmbH, 80997 München (DE)
(72) Erfinder: KLOTZ, Bernd, 85232 Bergkirchen (DE)
(74) Vertreter: Wilhelm, Ludwig
(86) Internationale Anmeldenummer: PCT/EP2012/069327
(87) Internationale Veröffentlichungsnummer: WO 2013/053612

(56) Entgegenhaltungen:
- EP-A2- 1 020 589
- DE-A1- 2 811 321
- DE-A1-102009 022 238
- US-A- 4 668 460
- US-A1- 2007 063 386

## Beschreibung

Die vorliegende Erfindung betrifft ein Verfahren zum Beschichten eines Formteils, insbesondere eines durch Spritzguss hergestellten Formteils, gemäß dem Oberbegriff des Anspruchs 1.

Formteile, insbesondere durch Spritzguss hergestellte Formteile, werden oftmals mit einer Beschichtung versehen, beispielsweise um sie vor äußeren Einwirkungen zu schützen oder auch aufgrund von optischen Ansprüchen. Eine Möglichkeit, das Formteil mit einer Beschichtung zu versehen, besteht darin, das Formteil zunächst ohne Beschichtung herzustellen, beispielsweise in einer Spritzgießmaschine, und das Formteil anschließend an einem separaten Ort zu beschichten. Hierzu kann das Formteil beispielsweise mittels eines Förderbandes von der Spritzgießmaschine in eine Lackierkammer befördert werden, wo es dann eine Beschichtung in Form eines Lacks erhält.

Dabei besteht jedoch das Problem, dass sich während der Beförderung zwischen Spritzgießmaschine und Lackierkammer Staub und andere Partikel auf dem Formteil ablagern können. Diese Partikel führen dazu, dass die nachträglich aufgetragene Beschichtung nicht vollflächig an dem Formteil haftet, was unter anderem dazu führen kann, dass die Beschichtung in ihrer Lebensdauer eingeschränkt ist.

Aus diesem und anderen Gründen ist es wünschenswert, Formteile bereits in der Spritzgießmaschine selbst mit einer Beschichtung zu versehen.

Aus der DE 10 2007 021 679 A1 ist ein Verfahren zum Expansionsfluten bekannt. Bei diesem Verfahren wird zunächst ein Formteil aus Kunststoff in einer Spritzgießmaschine gefertigt. Anschließend wird das Formteil mittels eines Kavitätskerns ein Stück weit von der einen Formwerkzeughälfte entfernt, wodurch zwischen dem Formteil und dieser Formwerkzeughälfte eine Kavität entsteht, in die dann eine zweite Komponente, beispielsweise eine Beschichtung eingefüllt werden kann.

Während das bekannte Verfahren zum Expansionsfluten eine Beschichtung des Formteils in der Spritzgießmaschine ermöglicht, wäre es wünschenswert, den Aufbau der für das Verfahren vorgesehenen Vorrichtung zu vereinfachen, da bei dem bekannten Verfahren ein separater Prägekern notwendig ist. Zudem kann es bei sehr dünnflüssigen Beschichtungen und Lacken, die teilweise eine geringere Viskosität als Wasser aufweisen, vorkommen, dass eine Abdichtung der zwischen dem Formteil und einer anliegenden Formwerkzeughälfte nicht sichergestellt werden kann.

Eine unzureichende Abdichtung hat unter anderem großen Einfluss auf die Qualität des fertigen Produkts und ebenfalls auf die Ausschussrate fehlerhafter Produkte. Da die fehlerhaften Produkte aufgrund der festen Verbindung zwischen Formteil und Beschichtung nicht ohne Weiteres wiederverwertet werden können, besteht in dieser Hinsicht Verbesserungsbedarf.

Aus der DE 28 11 321 (D1) ist ein Werkzeug mit zwei Werkzeughälften bekannt dessen Seitenwände beim Zusammenpressen elastisch nachgeben (und somit die Kavität verkleinert wird). Durch den Massedruck beim Einspritzen wird das Werkzeug jedoch leicht aufgedrückt. Aufgrund der elastischen Stauchung (Vorspannung) kann das Werkzeug somit elastisch nachgeben und es bleiben die Werkzeughälften trotzdem dichtend in Kontakt. Einlegeteile und die Schindung von duroplastischen Kunststoffen wird nicht erwähnt.

Aus der EP 1 020 589 (D2) ist ein Tauchkantenwerkzeug zur Oberflächen-beschichtung bekannt, in dessen Kavität ein elastisches "Werkzeugteil" (hier ein nachgiebiges Kissen) eingelegt werden kann, auf welches wiederum das starre/spröden Einlegeteil (hier ein Fliese) gelegt werden kann. Dadurch werden Unebenheiten ausgeglichen und es wird verhindert, dass der Einspritzdruck das spröde Einlegeteil zerstört. Die Schwindung von Kunststoffen und die Verwendung von Duromeren wird nicht erwähnt.

Aus der US 2007/063386 (D3) ist ein Art Tauchkantenwerkzeug bekannt in dem das Kavitätsvolumen durch Verschieben einer Werkzeugwand (bzw. von Teilen davon) variiert werden kann. Dies wird durch eine federgelagerte (Teil-)Werkzeugwand in einer der Werkzeughälften realisiert. Die interne Werkzeugpresskraft kann variiert werden entsprechend dem Einspritzdruck. Dies ist jedoch unabhängig von der Schließkraft, die die beiden Werkzeughälften aufeinander drückt. Ziel ist es die Nachdrückzeiten zu verringern. Das Dokument beinhaltet keine Einlegeteile und Verarbeitet keine aushärtenden Kunststoff.

Aus der US 4 668 460 (D4) ist ein Tauchkantenwerkzeug zur Oberflächen-beschichtung eines Einlegeteils bekannt. Auch wird das Schwinden von aushärtenden Kunststoff erwähnt. Es wird jedoch versucht die Kavität/ den Abstand der Werkzeughälften gleichzuhalten und der Schwund wird durch erhöhten Einspritzdruck ausgeglichen, siehe auch D5.

Aus der DE 10 2009 022238 8 (D5) ist ein Tauchkantenwerkzeug zur Oberflächenbeschichtung eines Einlegeteils bekannt. Auch wird das Schwinden von aushärtenden Kunststoff beschrieben. Der Schwund wird jedoch durch Spritzprägen ausgeglichen, siehe Paragraph [21] "ausgehend von der geschlossenen Form eine Kavität erzeugt wird, in die der Lack injiziert werden kann. Anschließend kann gegebenenfalls ein Prägeschritt erfolgen, wobei die Kavität verkleinert und der Lack über die Oberfläche des Substrats verteilt wird und ausreagieren kann." Eine elastischer Verformung des Formwerkzeugs und/oder elastischer Verformung des Formteils findet nicht statt.

Es ist daher Aufgabe der Erfindung, bekannte Verfahren zum Beschichten eines Formteils bezüglich ihrer Komplexität zu verbessern und den Ablauf des Verfahrens zu vereinfachen.

Es ist zudem Aufgabe der Erfindung, die Abdichtung der für die Beschichtung vorgesehenen Kavität so zu verbessern, dass auch bei sehr dünnflüssigen Beschichtungsharzen eine hohe Beschichtungsqualität bei geringer Ausschussrate erreicht wird.

Diese Aufgaben werden mit einem Verfahren mit den Merkmalen des Anspruchs 1 gelöst. Vorteilhafte Weiterbildungen sind Gegenstand der Unteransprüche.

Das erfindungsgemäße Verfahren besteht im Wesentlichen aus den folgenden Verfahrensschritten:

Zunächst wird das zu beschichtende Formteil in einer Kavität eines Formwerkzeugs angeordnet, wobei eine Teilkavität zwischen dem Formteil und einer ersten Formwerkzeughälfte verbleibt, wenn das Formwerkzeug mit einer Schließkraft auf einem ersten Schließkraftniveau beaufschlagt wird. Auf diesem Schließkraftniveau umfasst die Kavität des Formwerkzeugs somit das Volumen des Formteils und zusätzlich das Volumen der Teilkavität. Das Volumen der Teilkavität ist jedoch nicht konstant. Überraschend wurde festgestellt, dass sich das Volumen der Teilkavität in Abhängigkeit von der Schließkraft, mit dem das Formwerkzeug beaufschlagt wird, verändert. Somit kann alleine durch eine Veränderung der Schließkraft Einfluss auf die volumenmäßige Größe der Teilkavität genommen werden.

In einem zweiten Verfahrensschritt wird dann eine Beschichtungsmasse in die Teilkavität eingegeben und/oder unter Druck eingefüllt. Die Beschichtungsmasse füllt dabei die Teilkavität vorzugsweise vollständig aus.

Anschließend wird die Beschichtungsmasse auf bekannte Art und Weise vernetzt (ausgehärtet). Während des Vernetzens verringert sich jedoch das Volumen der Beschichtungsmasse aufgrund von Schwindung.

Erfindungsgemäß wird während des Vernetzens der Beschichtungsmasse die Schließkraft, mit der das Formwerkzeug beaufschlagt wird, erhöht, wobei die Erhöhung der Schließkraft aufgrund elastischer Verformung des Formwerkzeugs und/oder elastischer Verformung des Formteils (1) eine volumenmäßige Verkleinerung der Teilkavität bewirkt.

Im Gegensatz zu bekannten Verfahren und Vorrichtungen ist es bei dem erfindungsgemäßen Verfahren nicht erforderlich, einen Prägekern o.ä. vorzusehen, da überraschenderweise festgestellt wurde, dass alleine durch die elastische Verformung des Formwerkzeugs und/oder des darin angeordneten Formteils aufgrund der Erhöhung der Schließkraft eine volumenmäßige Verkleinerung der Teilkavität definiert einstellbar ist, die bei der Beschichtung eines Formteils genutzt werden kann, um die harzspezifische Schwindung beim Vernetzen auszugleichen.

Somit wird erfindungsgemäß u. a. das Volumen der Teilkavität über einen definierten Schließkraftverlauf an individuelle Eigenschaften, insbesondere eine Volumenverringerung des Beschichtungsharzes während des Vernetzens, angepasst.

Vorteilhafterweise wird z. B. also die Erhöhung der Schließkraft so gewählt, dass die Verkleinerung der Teilkavität an die Schwindung der Beschichtungsmasse während der Vernetzung angepasst ist.

Bei einer vorteilhaften Weiterentwicklung des erfindungsgemäßen Verfahrens ist vorgesehen, dass Luft, die in der Teilkavität vorhanden ist, vor und/oder während dem Eingeben der Beschichtungsmasse zumindest teilweise, vorzugsweise vollständig, evakuiert wird. Hierdurch kann unter anderem eine Blasenbildung in der Beschichtungsmasse verhindert werden, zu der es bei einer sehr starken Abdichtung der Teilkavität kommen kann, da in einem solchen Fall auch Luft nicht mehr entweichen kann.

Da die Schwindung der Beschichtungsmasse während des Vernetzens nicht schlagartig vonstattengeht, ist bei einer vorteilhaften Weiterentwicklung des erfindungsgemäßen Verfahrens vorgesehen, dass auch die Schließkraft des Formwerkzeugs kontinuierlich und bis zu einem zweiten Schließkraftniveau erhöht wird. Das zweite Schließkraftniveau wird vorteilhafterweise genau dann erreicht, wenn die Beschichtungsmasse vollständig vernetzt ist und/oder nicht mehr schwindet.

Da es vorkommen kann, dass die Beschichtungsmasse zwar nicht mehr schwindet, aber dennoch nicht vollständig vernetzt ist, ist es vorteilhaft, wenn die Schließkraft des Formwerkzeugs nach dem Erreichen des zweiten Schließkraftniveaus für ein erstes Zeitintervall auf dem zweiten Schließkraftniveau gehalten wird. Hiernach kann die Schließkraft heruntergefahren und das Formwerkzeug geöffnet werden, wodurch eine Entnahme des beschichteten Formteils ermöglicht wird.

Vorteilhafterweise wird die Schließkraft so lange erhöht, bis das Volumen der Teilkavität um 6 % bis 10 %, insbesondere um 8 %, verkleinert ist. Diese Verringerung hat sich als besonders vorteilhaft und gangbar für bekannte Beschichtungsmassen erwiesen.

Zur Steuerung und/oder Regelung der Schließkraft des Formwerkzeugs während des Vernetzens der Beschichtungsmasse ist bei einer vorteilhaften Weiterentwicklung des erfindungsgemäßen Verfahrens vorgesehen, dass das Volumen mittels einer Wegaufnehmereinrichtung, die die Bewegung der ersten Formwerkzeughälfte, insbesondere bezüglich des Formteils, erfasst, bestimmt wird.

Bei einer vorteilhaften Weiterentwicklung des erfindungsgemäßen Verfahrens ist vorgesehen, dass die Schließkraft vor dem Eingeben der Beschichtungsmasse für ein zweites Zeitintervall auf ein drittes Schließkraftniveau erhöht und anschließend auf das erste Schließkraftniveau eingestellt wird. Vorteilhafterweise liegt dabei das dritte Schließkraftniveau höher als das erste Schließkraftniveau.

Überraschenderweise hat sich gezeigt, dass durch die elastische Verformung des Formwerkzeugs aufgrund der aufgebrachten Schließkraft nicht nur die volumenmäßige Größe der Teilkavität eingestellt werden kann. Bei einer vorteilhaften Weiterentwicklung des erfindungsgemäßen Verfahrens ist daher zusätzlich vorgesehen, dass die Teilkavität mittels einer Werkstoffpressung zwischen der ersten Formwerkzeughälfte und dem Formteil und/oder zwischen der ersten Formwerkzeughälfte und der zweiten Formwerkzeughälfte abgedichtet wird. Bei einer Erhöhung der Schließkraft steigt somit die Flächenpressung zwischen der ersten Formwerkzeughälfte und dem Formteil bzw. zwischen der ersten Formwerkzeughälfte und der zweiten Formwerkzeughälfte an, so dass eine Abdichtung auch bei hohem Innendruck und sehr dünnflüssiger Beschichtungsmasse gewährleistet ist.

Als besonders vorteilhaft wird das erfindungsgemäße Verfahren für eine Beschichtung in Form eines Lacks, insbesondere eines Klarlacks, eines Farblacks oder eines Harzes, angesehen, weshalb diese bei vorteilhaften Weiterentwicklungen des erfindungsgemäßen Verfahrens zum Einsatz kommen.

Allgemeiner lässt sich sagen, dass bei vorteilhaften Weiterentwicklungen des erfindungsgemäßen Verfahrens als Beschichtungsmasse eine Substanz mit einer Viskosität (dynamische Viskosität bei 20°C und 1 bar) im Bereich von 0,3 mPA•s ≤ η ≤ 2 mPA•s, insbesondere im Bereich von 0,7 mPA•s ≤ η ≤ 1,3 mPA•s verwendet wird.

Für die drei Schließkraftniveaus, das erste Schließkraftniveau, das zweite Schließkraftniveau und das dritte Schließkraftniveau werden insbesondere die folgenden Bereiche (in Kombination oder für sich) bevorzugt:
erstes Schließkraftniveau: zwischen 25 kN und 300 kN;
zweites Schließkraftniveau: zwischen 50 kN und 500 kN;
drittes Schließkraftniveau: zwischen 50 kN und 1000 kN.

Um die Dichtwirkung für die Teilkavität zu erhöhen ist bei einer vorteilhaften Weiterentwicklung vorgesehen, dass die Teilkavität zumindest teilbereichsweise durch Eindringen zumindest einer Dichtkante in das Formteil abgedichtet wird. Alternativ oder zusätzlich ist es vorteilhaft, wenn die Teilkavität zumindest teilbereichsweise durch Eindringen zumindest einer Dichtkante in eine zweite Formwerkzeughälfte abgedichtet wird. In beiden Fällen ist es vorteilhaft, wenn das Eindringen derart erfolgt, dass eine elastische Rückverformung des Formteils und/oder der zweiten Formwerkzeughälfte bei einer Öffnung des Formwerkzeugs erfolgt. Auf diese Weise ist auch für nachfolgende Durchläufe des Verfahrens die Abdichtung sicher gestellt, da keine dauerhafte, plastische Verformung erfolgt. Außerdem wird verhindert, dass bei einer Abdichtung zwischen der ersten Formwerkzeughälfte und dem Formteil nach dem Verfahren eine sichtbare und/oder fühlbare Unebenheit in dem Formteil verbleibt.

Ergänzend zu der vogenannten Dichtkante oder alternativ dazu kann eine Dichtfläche an einer der Formwerkzeughälften vorgesehen sein, so dass eine Werkstoffpressung zwischen dieser Dichtfläche und sowohl der anderen Formwerkzeughälfte als auch des darin angeordneten Formteils erfolgen kann. Die Werkstoffpressung kann soweit gehen, dass nach dem Abheben der Dichtfläche stets eine elastische Rückverformung des Formteils und der zweiten Formwerkzeughälfte erfolgt.

Bei einer besonders vorteilhaften Weiterentwicklung des erfindungsgemäßen Verfahrens ist vorgesehen, dass die volumenmäßige Verkleinerung der Teilkavität in dem Maße erfolgt, dass die Formwerkzeughälfte während des Vernetzens zu jedem Zeitpunkt unter Druckaufbau auf der Beschichtungsmasse aufliegt. Hierdurch wird sicher gestellt, dass die Schwindung der Beschichtungsmasse vollständig ausgeglichen wird. Außerdem wird vermieden, dass sich die Beschichtungsmasse, bedingt durch die Schrumpfung, von der Formwerkzeughälfte ablöst, was für die spätere Oberfläche der Beschichtung und somit die des beschichteten Formteils nachteilig wäre.

Erfindungsgemäß hat sich auch gezeigt, dass mittels des in der Teilkavität vorherrschenden Innendrucks Einfluss auf den Fortlauf der Vernetzung genommen werden kann. Dies wird daher bei einer vorteilhaften Weiterentwicklung des erfindungsgemäßen Verfahrens realisiert, wobei insbesondere mittels des zeitlichen Verlaufs des Innendrucks ein Einfluss auf den Fortlauf der Vernetzung genommen wird. Dabei wird insbesondere Einfluss auf die Reaktionsgeschwindigkeit genommen.

Nachfolgend wird die Erfindung anhand von 9 Zeichnungen genauer erläutert. Dabei zeigen:
Figuren 1 bis 5:
   den Verfahrensablauf gemäß einer Ausführungsform des erfindungsgemäßen Verfahrens anhand eines schematisch im Querschnitt dargestellten Formwerkzeugs;
   Figuren 6a bis 6d:
      die Verläufe der Schließkraft, des Füllungsdrucks, der Werkzeugatmung und des Innendrucks über die Zeit während eines Durchlaufs des erfindungsgemäßen Verfahrens in einer Ausführungsform;
Figur 7
   eine alternative Ausführungsform eines Formwerkzeugs zur Durchführung des erfindungsgemäßen Verfahrens.

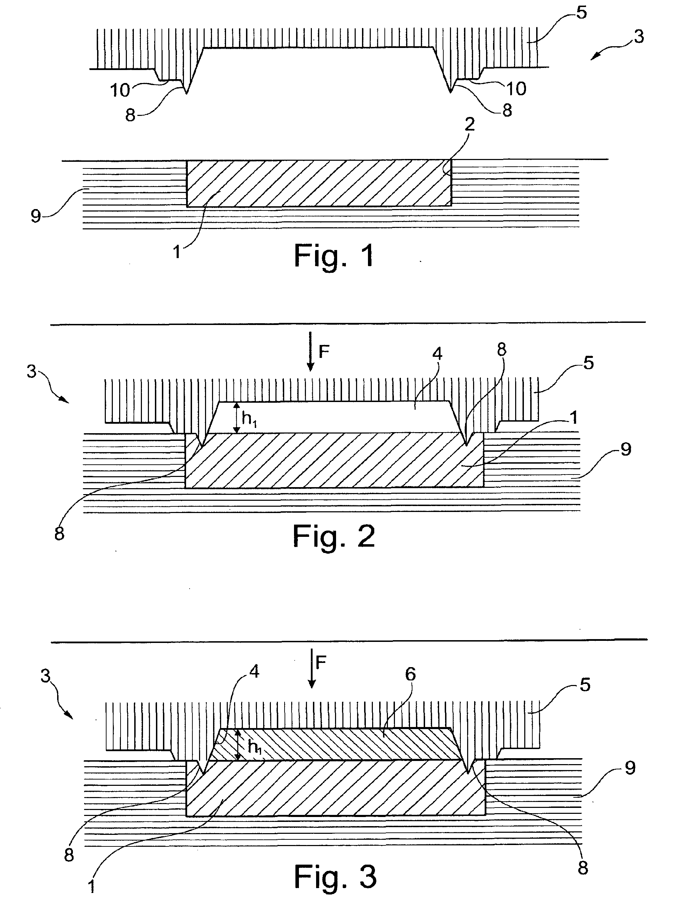

Die Figur 1 zeigt ein Formwerkzeug 3, mittels dem das erfindungsgemäße Verfahren durchgeführt wird. Das Formwerkzeug 3 besteht aus einer ersten Formwerkzeughälfte 5 und einer zweiten Formwerkzeughälfte 9. In der Figur 1 befindet sich das Formwerkzeug 3 in einem geöffneten Zustand. Das Formwerkzeug 3, genauer die zweite Formwerkzeughälfte 9 weist eine Kavität 2 auf, in der ein Formteil 1 angeordnet ist, welches im Laufe des Verfahrens beschichtet wird. Die erste Formwerkzeughälfte 5 weist zwei Dichtkanten 8 auf, mittels derer später eine Teilkavität (siehe Figur 2) abgedichtet wird.

Wird das Formwerkzeug 3 nun mit einer Schließkraft F auf einem ersten Schließkraftniveau beaufschlagt, so geht das Formwerkzeug 3 in einen geschlossenen Zustand über, wie er in Figur 2 dargestellt ist. Dabei ist ersichtlich, dass die Dichtkanten 8 in das Formteil 1 eindringen. Allerdings wird das Formteil 1 dabei lediglich elastisch und nicht plastisch verformt, damit nach Abschluss des erfindungsgemäßen Verfahrens keine Kerbe in dem Formteil 1 verbleibt. Gegebenenfalls kann es auch zu einer Werkstoffpressung zwischen der Dichtfläche 10 und sowohl des Formteils 1 als auch der zweiten Formwerkzeughälfte 9 kommen. Je nach Schließkraft F kann es hierbei auch zu einer elastischen Verformung des Formteils 1 und der zweiten Formwerkzeughälfte 9 im Bereich der Dichtfläche 10 kommen.

In der Figur 2 ist außerdem ersichtlich, dass nun eine Teilkavität 4 zwischen dem Formteil 1 und der ersten Formwerkzeughälfte 3 gebildet wurde. Diese Teilkavität weist eine erste Höhe h₁ auf, die von der Schließkraft F abhängig ist, da sich auch die Formwerkzeughälften 3, 9 bei einer Beaufschlagung mit unterschiedlichen Schließkräften F elastisch verformen.

Erfindungsgemäß wird anschließend in die Teilkavität 4 eine Beschichtungsmasse 6 eingefüllt, wobei die Teilkavität 4 vollständig von der Beschichtungsmasse 6 ausgefüllt wird. Der Zustand nach dem Einfüllen der Beschichtungsmasse 6 ist aus der Figur 3 ersichtlich. Die Teilkavität 4 hat weiterhin die gleiche erste Höhe h₁.

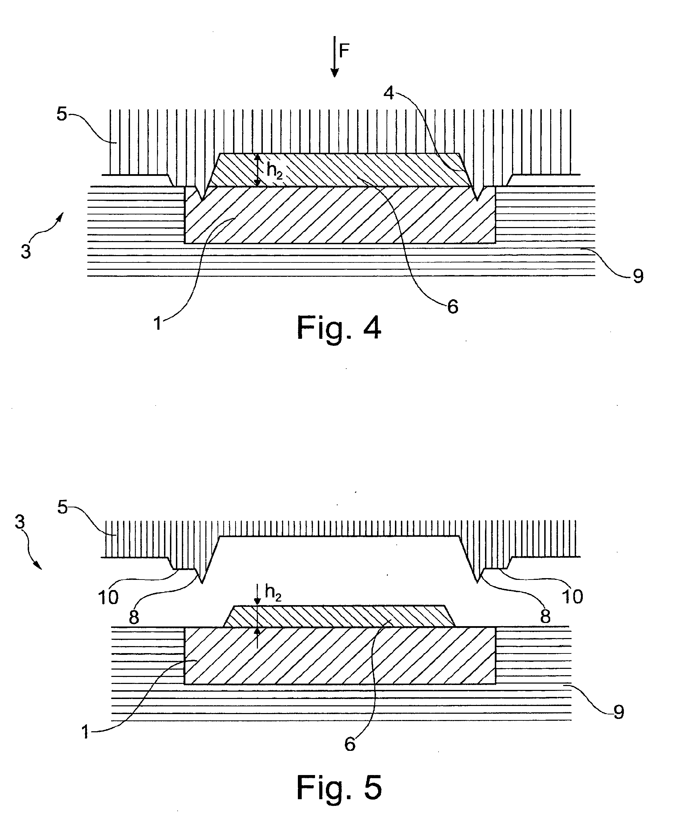

Im Anschluss daran erfolgt das Vernetzen der Beschichtungsmasse 6. Diese schwindet während des Vernetzens. Um diese Schwindung auszugleichen wird die Schließkraft F erhöht, wodurch die Teilkavität 4 verkleinert wird und die Dichtkanten 8 tiefer in das Formteil 1 eindringen, wobei dieses weiterhin lediglich elastisch verformt wird. Hierbei kann es zu einer zunehmenden Werkstoffpressung zwischen der Dichtfläche 10 und sowohl des Formteils 1 als auch der zweiten Formwerkzeughälfte 9 kommen. Je nach Schließkraft F kann es hierbei auch zu einer (weiteren) elastischen Verformung des Formteils 1 und der zweiten Formwerkzeughälfte 9 im Bereich der Dichtfläche 10 kommen. Nach dem Abschluss der Vernetzung der Beschichtungsmasse 6 weist die Teilkavität 4 eine zweite Höhe h₂ auf, die geringer ist als die erste Höhe h₁ (Figur 4). Allerdings füllt die Beschichtungsmasse 6 weiterhin das gesamte Volumen (das nun geringer ist als zu Beginn der Vernetzung) der Teilkavität 4 aus.

Zum Abschluss des erfindungsgemäßen Verfahrens wird die Schließkraft F bis auf 0 verringert und das Formwerkzeug 3 wird geöffnet, wie das aus der Figur 5 hervor geht. In diesem Zustand ist es nun möglich, das beschichtete Formteil zu entnehmen oder auszustoßen.

Die Höhen h₁ und h₂ müssen nicht über die gesamte Teilkavität 4 konstant sein. Vielmehr wird verdeutlicht, dass die Höhe der Teilkavität 4 während des erfindungsgemäßen Verfahrens abnimmt, wodurch die Schwindung der Beschichtungsmasse 6 ausgeglichen wird.

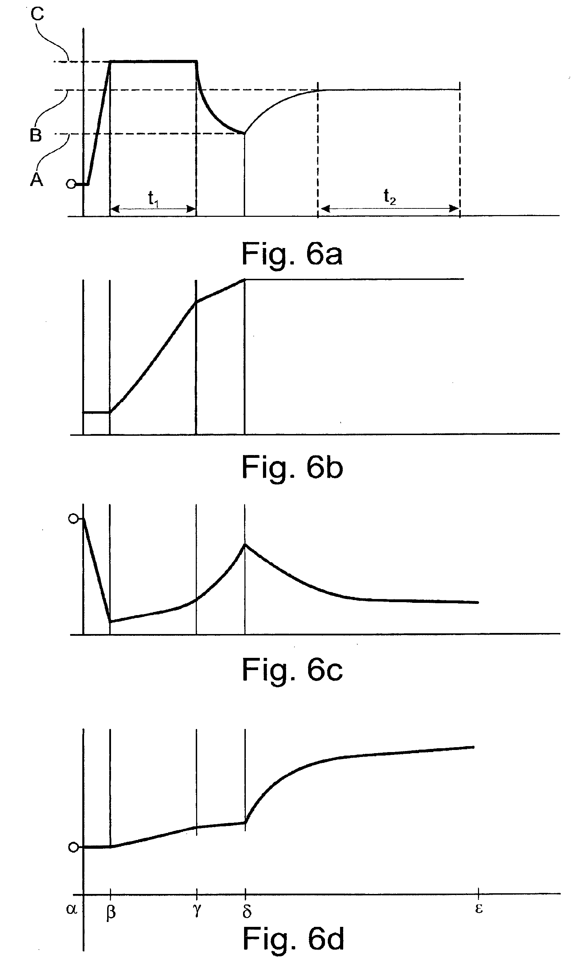

Die Figur 6a zeigt den Verlauf der Schließkraft F des Formwerkzeugs 3 über die Dauer des erfindungsgemäßen Verfahrens. Zu Beginn des Verfahrens, zu einem Zeitpunkt α, beträgt die Schließkraft F gleich 0. Dann wird sie bis zu einem Zeitpunkt β kontinuierlich auf ein drittes Schließkraftniveau C erhöht, auf dem sie für ein erste Zeitintervall t₁, das heißt bis zu einem Zeitpunkt γ gehalten wird. In diesem Zeitraum wird damit begonnen, die Teilkavität 4 mit der Beschichtungsmasse 6 zu befüllen. Anschließend wird die Schließkraft F auf ein erstes Schließkraftniveau A abgesenkt, und zwar bis zu einem Zeitpunkt δ. Das Befüllen der Teilkavität 4 endet ebenfalls zu diesem Zeitpunkt δ.

Nachdem die Teilkavität 4 vollständig von der Beschichtungsmasse 6 ausgefüllt ist, beginnt die Vernetzung der Beschichtungsmasse 6. Während des Vernetzens wird die Schließkraft F von dem ersten Schließkraftniveau A auf ein zweites Schließkraftniveau B erhöht, wobei das zweite Schließkraftniveau B bei dem vorliegenden Ausführungsbeispiel des erfindungsgemäßen Verfahrens geringer ist als das dritte Schließkraftniveau C.

Nachdem die Schließkraft F das zweite Schließkraftniveau B erreicht hat, wird sie für ein zweites Zeitintervall t₂, also bis zu einem Zeitpunkt ε, auf diesem zweiten Schließkraftniveau B gehalten, um sicherzustellen, dass die Beschichtungsmasse 6 bis zum vollständigen Abschluss der Vernetzung mit einer Schließkraft F auf diesem Schließkraftniveau B beaufschlagt und so unter Überdruck gehalten wird.

Hierdurch sind einerseits Eigenschaften der Beschichtung z. B. die Oberflächengüte und/oder der Glanzgrad verbessert und andererseits durch definierten Druckverlauf in der Beschichtungsschicht während des Vernetzens die Reproduzierbarkeit der Ergebnisse verbessert und die Ausschlussrate verringert. Unter dem Begriff Oberflächengüte oder Oberflächenqualität wird im Rahmen der Erfindung insbesondere die Qualität der Oberflächenkopierung oder Replikation verstanden. Durch hohen Innendruck wird der Lack in die Stahloberfläche gedrückt und somit eine genaue Kopie erzeugt. Mehr Innendruck durch mehr Schließkraft erzeugt somit auch eine bessere Oberflächenqualität. Jegliche Bewegung der sich bildenden Lackfläche an der Oberfläche kann dabei die gesamte Schicht zerreißen, weshalb diese erfindungsgemäß vermieden werden soll. Gasbildung in Form von Blasen an der Oberfläche des Formteils wird durch den Innendruck oder die Schließkraft unterdrückt oder verhindert.

In der Figur 6b ist der Verlauf des Fülldrucks, auch Einspritzdruck genannt, über die Dauer des erfindungsgemäßen Verfahrens dargestellt. Der Fülldruck ist der Druck, mit dem die Beschichtungsmasse 6 in die Teilkavität 4 eingebracht wird. Zum Zeitpunkt α ist der Fülldruck gleich 0 und bleibt auch bis zum Zeitpunkt β auf diesem Niveau. Anschließend steigt der Fülldruck bis zum Zeitpunkt δ, wobei der Fülldruck zwischen dem Zeitpunkt β und dem Zeitpunkt γ stärker ansteigt als zwischen dem Zeitpunkt γ und dem Zeitpunkt δ. Der Anstieg ist jedoch in beiden Fällen linear. Zwischen dem Zeitpunkt δ und dem Zeitpunkt ε bleibt der Fülldruck auf einem konstanten Niveau.

Die Figur 6c zeigt den Verlauf der Werkzeugatmung bzw. der Stauchung des Werkzeugs über die Dauer des erfindungsgemäßen Verfahrens. Diese verändert sich auf Grund der elastischen Verformung des Formwerkzeugs 3. Zu Beginn des Verfahrens, zum Zeitpunkt α, beträgt die Werkzeugatmung gleich 0, da das Formwerkzeug zwar geschlossen ist, jedoch nicht mit einer Schließkraft F beaufschlagt wird. Da die Schließkraft F gemäß Figur 6a zwischen den Zeitpunkten α und β erhöht wird, sinkt die Werkzeugatmung dementsprechend bis zum Zeitpunkt β. Anders ausgedrückt bedeutet dies, dass das Formwerkzeug 3 gestaucht wird.

Anschließend bleibt die Schließkraft F zwar konstant, aufgrund der Erhöhung des Fülldrucks (Figur 6b) steigt die Werkzeugatmung jedoch, da die Formwerkzeughälften 4, 9 des Formwerkzeugs 3 durch den Fülldruck auseinander gedrückt werden. Bis zum Zeitpunkt γ steigt die Werkzeugatmung somit dem steigenden Fülldruck entsprechend linear.

Da zwischen dem Zeitpunkt γ und dem Zeitpunkt δ die Schließkraft F verringert wird, steigt die Werkzeugatmung entsprechend, wobei in diesem Zeitraum auch der Fülldruck noch ansteigt, was ebenfalls eine Steigung der Werkzeugatmung bewirkt. Die Werkzeugatmung bleibt jedoch unter dem zum Startzeit α vorliegenden Wert 0.

Zwischen dem Zeitpunkt δ und dem Zeitpunkt ε wird die Werkzeugatmung wieder verringert und damit die Stauchung Werkzeugs erhöht, da die Schließkraft F während des Vernetzens der Beschichtungsmasse 6 wieder erhöht wird und der Fülldruck konstant bleibt.

Die Figur 6c zeigt den Verlauf des im Formwerkzeug 3 herrschenden Innendrucks über die Dauer des erfindungsgemäßen Verfahrens. Dieser Innendruck wird im Wesentlichen von zwei Komponenten beeinflusst. Zum einen von dem Fülldruck der Beschichtungsmasse 6 und zum anderen von der Schließkraft F des Formwerkzeugs 3. Die Schließkraft F hat aber nur dann einen Einfluss auf den Innendruck, wenn die Teilkavität 4 mit Beschichtungsmasse 6 gefüllt ist.

Dementsprechend beträgt der Innendruck zum Zeitpunkt α gleich 0 (über Umgebungsdruck). Der Innendruck verändert sich auch bis zum Zeitpunkt β nicht, da sich der Fülldruck nicht verändert. Zwar steigt die Schließkraft F, da aber die Teilkavität 4 noch leer, das heißt mit Luft gefüllt ist, hat dies keinen wesentlichen Einfluss auf den Innendruck.

Zwischen dem Zeitpunkt β und dem Zeitpunkt δ steigt der Innendruck aufgrund des Anstiegs des Fülldrucks und der vorliegenden Schließkraft F. Der Anstieg des Innendrucks zwischen dem Zeitpunkt δ und dem Zeitpunkt ε wird allein von dem Anstieg der Schließkraft F bewirkt, da der Fülldruck in diesem Zeitraum konstant bleibt.

Das erfindungsgemäße Verfahren kann je nach den verwendeten Materialien und sonstigen Gegebenheiten anhand des Verlaufs der Schließkraft und des Fülldrucks angepasst werden.

Abschließend ist anzumerken, dass die in den Figuren 6a bis 6d dargestellten Verläufe nicht maßstäblich und insbesondere nicht mit einem gemeinsamen Maßstab dargestellt sind und lediglich als mögliche beispielhafte Verläufe zum Zwecke der Erläuterung der Erfindung anzusehen sind.

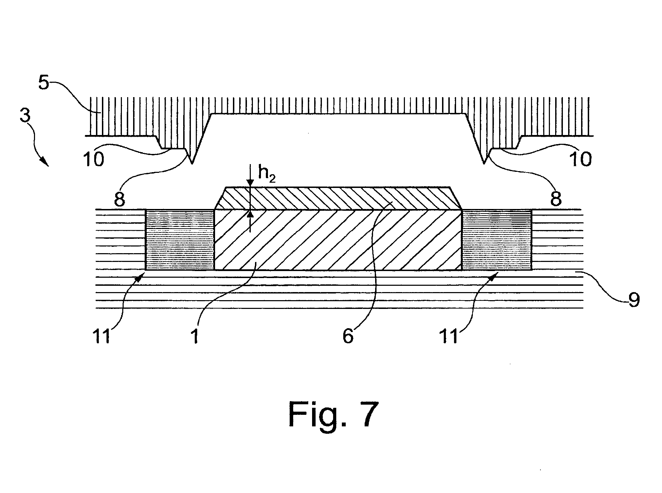

Die Figur 7 entspricht vom Verfahrensablauf her der Situation in Figur 5 und zeigt ein Ausführungsbeispiel, bei dem die Formwerkzeughälfte 9 einen Einsatz 11 aufweist, welcher elastischer ist als die Formwerkzeughälften 5, 9. Dieser Einsatz kann somit ein Elastizitätsmodul aufweisen, das geringer ist als dasjenige der üblicherweise aus Stahl bestehenden Formwerkzeughälften 5 und 9. Beispielsweise könnte es sich um einen Einsatz aus Bronze oder Messing handeln. Je nach Verarbeitungsbedingungen können aber auch Einsätze aus geeigneten Kunststoffmaterialien verwendet werden, beispielsweise aus EPDM. Alternativ zu einem geringeren Elastizitätsmodul oder ergänzend dazu können gezielte Materialschwächungen wie zum Beispiel geeignete Einschnitte vorgesehen werden, die in analoger Weise eine erhöhte Stauchung ermöglichen bzw. im Ergebnis einem niedrigeren Elastizitätsmodul gleich kommen. Im Bedarfsfalle kann auch die gesamte Formwerkzeughälfte 9 ein geringeres Elastizitätsmodul aufweisen als die Formwerkzeughälfte 5 und umgekehrt. Alternativ zu einem geringeren Elastizitätsmodul oder ergänzend dazu können gezielte Materialschwächungen wie zum Beispiel geeignete Einschnitte in einer der Formwerkzeughälften vorgesehen werden, die in analoger Weise eine erhöhte Stauchung ermöglichen bzw. im Ergebnis einem niedrigeren Elastizitätsmodul gleich kommen. Jedenfalls sind auch Ausführungsformen denkbar, bei denen auf die Verwendung von Einsätzen verzichtet werden kann. Die Ausführungsform der Figur 7 kann für Verfahren vorteilhaft sein, bei denen die Verkleinerung der Teilkavität 4, also der durch elastische Verformung bewirkte Prägehub, relativ große Werte annimmt, beispielsweise weil besonders viel Beschichtungsmassse verwendet wird. Bei der Ausführungsform gemäß der Figur 7 kann gegebenenfalls auf die Dichtkante 8 verzichtet werden.

### Bezugszeichenliste:

- 1: Formteil
- 2: Kavität
- 3: Formwerkzeug
- 4: Teilkavität
- 5: erste Formwerkzeughälfte
- 6: Beschichtungsmasse
- 8: Dichtkante
- 9: zweite Formwerkzeughälfte
- 10: Dichtfläche
- 11: Einsatz

- F: Schließkraft

- t₁: erstes Zeitintervall
- t₂: zweites Zeitintervall

- h₁: erste Höhe
- h₂: zweite Höhe

- A: erstes Schließkraftniveau
- B: zweites Schließkraftniveau
- C: drittes Schließkraftniveau

- α: Zeitpunkt
- β: Zeitpunkt
- γ: Zeitpunkt
- δ: Zeitpunkt
- ε: Zeitpunkt

## Patentansprüche

1. Verfahren zum Beschichten eines Formteils (1), insbesondere eines durch Spritzguss hergestellten Formteils, mit folgenden Schritten:
a. Anordnen des Formteils (1) in einer Kavität (2) eines Formwerkzeugs (3), wobei eine Teilkavität (4) zwischen dem Formteil (1) und einer ersten Formwerkzeughälfte (5) des Formwerkzeugs (3) verbleibt, wenn das Formwerkzeug (3) mit einer Schließkraft (F) auf einem ersten Schließkraftniveau (A) beaufschlagt wird;
b. Eingeben einer Beschichtungsmasse (6) in die Teilkavität (4);
c. Aushärten/Vernetzen der Beschichtungsmasse (6);
**dadurch gekennzeichnet, dass** während des Aushärtens/Vernetzen der Beschichtungsmasse (6) die Schließkraft (F) des Formwerkzeugs (3) erhöht wird, wobei die Erhöhung der Schließkraft (F) aufgrund elastischer Verformung des Formwerkzeugs (3) und/oder elastischer Verformung des Formteils (1) eine volumenmäßige Verkleinerung der Teilkavität (4) bewirkt.

2. Verfahren zum Beschichten eines Formteils (1) gemäß Anspruch 1, **dadurch gekennzeichnet, dass** die Verkleinerung an die Schwindung der Beschichtungsmasse (6) während der Vernetzung angepasst wird.

3. Verfahren zum Beschichten eines Formteils (1) gemäß Anspruch 1 oder 2, **dadurch gekennzeichnet, dass** in der Teilkavität (4) vorhandene Luft vor und/oder während dem Eingeben der Beschichtungsmasse (6) zumindest teilweise evakuiert wird.

4. Verfahren zum Beschichten eines Formteils (1) gemäß einem der vorhergehenden Ansprüche, **dadurch gekennzeichnet, dass** die Schließkraft (F) des Formwerkzeugs (3) während des Aushärtens der Beschichtungsmasse (6) kontinuierlich bis zu einem zweiten Schließkraftniveau (B) erhöht wird.

5. Verfahren zum Beschichten eines Formteils (1) gemäß einem der vorhergehenden Ansprüche, **dadurch gekennzeichnet, dass** die Schließkraft (F) des Formwerkzeugs (3) nach dem Erreichen des zweiten Schließkraftniveaus (B) für ein erstes Zeitintervall (t₁) auf dem zweiten Schließkraftniveau (B) gehalten wird.

6. Verfahren zum Beschichten eines Formteils (1) gemäß einem der vorhergehenden Ansprüche, **dadurch gekennzeichnet, dass** die Schließkraft (F) so lange erhöht wird, bis das Volumen der Teilkavität (4) um 6 % bis 10 %, insbesondere um 8 %, verkleinert ist.

7. Verfahren zum Beschichten eines Formteils (1) gemäß Anspruch 4, **dadurch gekennzeichnet, dass** das Volumen der Teilkavität (4) mittels einer Wegaufnehmereinrichtung, die die Bewegung der ersten Formwerkzeughälfte (5) in Richtung der Schließkraft (F) erfasst, bestimmt wird.

8. Verfahren zum Beschichten eines Formteils (1) gemäß einem der vorhergehenden Ansprüche, **dadurch gekennzeichnet, dass** die Schließkraft (F) vor dem Eingeben der Beschichtungsmasse (6) für ein zweites Zeitintervall (t₂) auf ein drittes Schließkraftniveau (C) erhöht und anschließend auf das erste Schließkraftniveau (A) eingestellt wird.

9. Verfahren zum Beschichten eines Formteils (1) gemäß Anspruch 6, **dadurch gekennzeichnet, dass** das dritte Schließkraftniveau (C) höher liegt als das erste Schließkraftniveau (A).

10. Verfahren zum Beschichten eines Formteils (1) gemäß einem der vorhergehenden Ansprüche, **dadurch gekennzeichnet, dass** die Teilkavität (4) mittels einer Werkstoffpressung zwischen der ersten Formwerkzeughälfte (5) und dem Formteil (1) und/oder zwischen der ersten Formwerkzeughälfte (5) und der zweiten Formwerkzeughälfte (9) abgedichtet wird

11. Verfahren zum Beschichten eines Formteils (1) gemäß einem der vorhergehenden Ansprüche, **dadurch gekennzeichnet, dass** die Beschichtungsmasse (6) ein Lack, insbesondere ein Klarlack, ein Farblack oder ein Harz ist.

12. Verfahren zum Beschichten eines Formteils (1) gemäß einem der vorhergehenden Ansprüche, **dadurch gekennzeichnet, dass** als Beschichtungsmasse (6) eine Substanz mit einer Viskosität (η) im Bereich von 0,3 mPA•s ≤ η ≤ 2 mPA•s, insbesondere im Bereich von 0,7 mPA•s ≤ η ≤ 1,3 mPA•s verwendet wird.

13. Verfahren zum Beschichten eines Formteils (1) gemäß einem der vorhergehenden Ansprüche, **dadurch gekennzeichnet, dass** das erste Schließkraftniveau (A) im Bereich von 25 kN bis 300 kN liegt.

14. Verfahren zum Beschichten eines Formteils (1) gemäß einem der vorhergehenden Ansprüche, **dadurch gekennzeichnet, dass** das zweite Schließkraftniveau (B) im Bereich von 50 kN bis 500 kN liegt.

15. Verfahren zum Beschichten eines Formteils (1) gemäß einem der vorhergehenden Ansprüche, **dadurch gekennzeichnet, dass** das dritte Schließkraftniveau (C) im Bereich von 50 kN bis 1000 kN liegt.

## Claims

1. A method for coating a molded part (1), in particular a molded part produced by injection molding, comprising the following steps:
a. arranging the molded part (1) in a cavity (2) of a molding tool (3), wherein a partial cavity (4) between the molded part (1) and a first molding-tool half (5) of the molding tool (3) remains when a closing force (F) is applied to the molding tool (3) at a first closing-force level (A);
b. introducing a coating mass (6) into the partial cavity (4);
c. curing/cross-linking the coating mass (6); **characterized in that** the closing force (F) of the molding tool (3) is increased during the curing/cross-linking of the coating mass (6), wherein the increase in the closing force (F) causes a volume reduction of the partial cavity (4) due to elastic deformation of the molding tool (3) and/or elastic deformation of the molded part (1).

2. The method for coating a molded part (1) according to claim 1, **characterized in that** the reduction is adapted to the shrinkage of the coating mass (6) during the cross-linking.

3. The method for coating a molded part (1) according to claim 1 or 2, **characterized in that** air present in the partial cavity (4) is at least partially evacuated before and/or during the introduction of the coating mass (6).

4. The method for coating a molded part (1) according to one of the preceding claims, **characterized in that** the closing force (F) of the molding tool (3) is increased continuously up to a second closing-force level (B) during the curing of the coating mass (6).

5. The method for coating a molded part (1) according to one of the preceding claims, **characterized in that** the closing force (F) of the molding tool (3) is held for a first time interval (t₁) at the second closing-force level (B) after the second closing-force level (B) is reached.

6. The method for coating a molded part (1) according to one of the preceding claims, **characterized in that** the closing force (F) is increased until the volume of the partial cavity (4) is reduced by 6% to 10%, in particular by 8%.

7. The method for coating a molded part (1) according to claim 4, **characterized in that** the volume of the partial cavity (4) is determined by means of a travel sensor device, which detects the movement of the first molding-tool half (5) in the direction of the closing force (F).

8. The method for coating a molded part (1) according to one of the preceding claims, **characterized in that** before the introduction of the coating mass (6), the closing force (F) is increased for a second time interval (t₂) to a third closing-force level (C) and is subsequently set to the first closing-force level (A).

9. The method for coating a molded part (1) according to claim 6, **characterized in that** the third closing-force level (C) lies higher than the first closing-force level (A).

10. The method for coating a molded part (1) according to one of the preceding claims, **characterized in that** the partial cavity (4) is sealed by means of a material pressure between the first molding-tool half (5) and the molded part (1) and/or between the first molding-tool half (5) and the second molding-tool half (9).

11. The method for coating a molded part (1) according to one of the preceding claims, **characterized in that** the coating mass (6) is a lacquer, in particular a clear lacquer, a colored lacquer or a resin.

12. The method for coating a molded part (1) according to one of the preceding claims, **characterized in that** a substance with a viscosity (η) in the range of 0.3 mPA·s ≤ η ≤ 2 mPA·s, in particular in the range of 0.7 mPA·s ≤ η ≤ 1.3 mPA·s is used as coating mass (6).

13. The method for coating a molded part (1) according to one of the preceding claims, **characterized in that** the first closing-force level (A) lies in the range of 25 kN to 300 kN.

14. The method for coating a molded part (1) according to one of the preceding claims, **characterized in that** the second closing-force level (B) lies in the range of 50 kN to 500 kN.

15. The method for coating a molded part (1) according to one of the preceding claims, **characterized in that** the third closing-force level (C) lies in the range of 50 kN to 1000 kN.

## Revendications

1. Procédé de revêtement d'une pièce moulée (1), en particulier d'une pièce moulée fabriquée par moulage par injection, comprenant les étapes suivantes :
a. agencement de la pièce moulée (1) dans une cavité (2) d'un outil de moulage (3), sachant qu'une cavité partielle (4) persiste entre la pièce moulée (1) et une première moitié d'outil de moulage (5) de l'outil de moulage (3) lorsque l'outil de moulage (3) reçoit une force de fermeture (F) à un premier niveau de force de fermeture (A) ;
b. introduction d'une masse de revêtement (6) dans la cavité partielle (4) ;
c. durcissement/réticulation de la masse de
revêtement (6) ;
**caractérisé en ce que** pendant le durcissement/la réticulation de la masse de revêtement (6), la force de fermeture (F) de l'outil de moulage (3) est augmentée, sachant que l'augmentation de la force de fermeture (F) du fait de la déformation élastique de l'outil de moulage (3) et/ou de la déformation élastique de la pièce moulée (1) a pour effet une réduction de volume de la cavité partielle (4).

2. Procédé de revêtement d'une pièce moulée (1) selon la revendication 1, **caractérisé en ce que** la réduction est adaptée au retrait de la masse de revêtement (6) pendant la réticulation.

3. Procédé de revêtement d'une pièce moulée (1) selon la revendication 1 ou 2, **caractérisé en ce que** de l'air restant dans la cavité partielle (4) est évacué au moins partiellement avant et/ou pendant l'introduction de la masse de revêtement (6).

4. Procédé de revêtement d'une pièce moulée (1) selon l'une des revendications précédentes, **caractérisé en ce que** la force de fermeture (F) de l'outil de moulage (3) est augmentée en continu jusqu'à un deuxième niveau de force de fermeture (B) pendant le durcissement de la masse de revêtement (6).

5. Procédé de revêtement d'une pièce moulée (1) selon l'une des revendications précédentes, **caractérisé en ce que** la force de fermeture (F) de l'outil de moulage (3) est maintenue au deuxième niveau de force de fermeture (B) pendant un premier intervalle de temps (t₁), après avoir atteint le deuxième niveau de force de fermeture (B).

6. Procédé de revêtement d'une pièce moulée (1) selon l'une des revendications précédentes, **caractérisé en ce que** la force de fermeture (F) est augmentée jusqu'à ce que le volume de la cavité partielle (4) ait réduit de 6 % à 10 %, en particulier de 8 %.

7. Procédé de revêtement d'une pièce moulée (1) selon la revendication 4, **caractérisé en ce que** le volume de la cavité partielle (4) est déterminé au moyen d'un dispositif d'enregistrement de déplacement qui détecte le mouvement de la première moitié d'outil de moulage (5) en direction de la force de fermeture (F).

8. Procédé de revêtement d'une pièce moulée (1) selon l'une des revendications précédentes, **caractérisé en ce que** la force de fermeture (F), avant l'introduction de la masse de revêtement (6), est augmentée à un troisième niveau de force (C) pendant un second intervalle de temps (t₂), puis réglée ensuite au premier niveau de force de fermeture (A).

9. Procédé de revêtement d'une pièce moulée (1) selon la revendication 6, **caractérisé en ce que** le troisième niveau de force (C) est supérieur au premier niveau de force de fermeture (A).

10. Procédé de revêtement d'une pièce moulée (1) selon l'une des revendications précédentes, **caractérisé en ce que** la cavité partielle (4) est étanchéifiée par compression de matière entre la première moitié d'outil de moulage (5) et la pièce moulée (1) et/ou entre la première moitié d'outil de moulage (5) et la seconde moitié d'outil de moulage (9).

11. Procédé de revêtement d'une pièce moulée (1) selon l'une des revendications précédentes, **caractérisé en ce que** la masse de revêtement (6) est une peinture, en particulier un vernis, une peinture couleur ou une résine.

12. Procédé de revêtement d'une pièce moulée (1) selon l'une des revendications précédentes, **caractérisé en ce qu'**une substance ayant une viscosité (η) dans la plage de 0,3 mPA.s ≤ η ≤ 2 mPA.s, en particulier dans la plage de 0,7 mPA.s ≤ η ≤ 1,3 mPA.s est employée en tant que masse de revêtement (6).

13. Procédé de revêtement d'une pièce moulée (1) selon l'une des revendications précédentes, **caractérisé en ce que** le premier niveau de force de fermeture (A) est situé dans la plage de 25 kN à 300 kN.

14. Procédé de revêtement d'une pièce moulée (1) selon l'une des revendications précédentes, **caractérisé en ce que** le deuxième niveau de force (B) est situé dans la plage de 50 kN à 500 kN.

15. Procédé de revêtement d'une pièce moulée (1) selon l'une des revendications précédentes, **caractérisé en ce que** le troisième niveau de force (C) est situé dans la plage de 50 kN à 1000 kN.
